# EUROPÄISCHE PATENTSCHRIFT

(11) **EP 2 284 120 B1**
(45) Veröffentlichungstag und Bekanntmachung des Hinweises auf die Patenterteilung: **20.07.2016**
(21) Anmeldenummer: 10171848.4
(22) Anmeldetag: 04.08.2010
(51) Int. Cl.: B67C 3/00, B65B 57/02, B29C 49/06, B29C 49/36, B29C 49/42, B29C 49/64

(54) **Behältnis - Behandlungsanlage mit rückwirkender Korrekturmöglichkeit**
Container processing assembly with retroactive correction option
Installation de traitement de récipient dotée d'une possibilité de correction à effet rétroactif

(30) Priorität: 10.08.2009 DE 102009037172
(43) Veröffentlichungstag der Anmeldung: 16.02.2011
(73) Patentinhaber: Krones AG, 93073 Neutraubling (DE)
(72) Erfinder: Bierschneider, Stefan, 93092, Sarching (DE)
(74) Vertreter: Bittner, Bernhard

(56) Entgegenhaltungen:
- EP-A1- 1 935 839
- EP-A2- 1 837 157
- DE-A1- 19 928 325
- DE-B3-102006 013 800
- US-A- 4 514 954
- US-A1- 2007 163 212
- US-B1- 6 584 805

## Beschreibung

Die vorliegende Erfindung bezieht sich auf eine Vorrichtung zum Behandeln von Behältnissen. Derartige Vorrichtungen sind aus dem Stand der Technik bekannt. So ist es bekannt, dass im Rahmen von geblockten Anlagen, d.h. Anlagen, deren Arbeitseinheiten aufeinander synchronisiert sind, zunächst Vorformlinge erwärmt und anschließend zu Behältnissen expandiert werden. Diese expandierten Behältnisse werden in der Folge gereinigt und schließlich mit einem Getränk befüllt.

Die US4514954 offenbart eine Vorrichtung gemäß dem Oberbegriff des Anspruchs 1.

Die WO 00/078664 A1 beschreibt eine Abfüllvorrichtung der Flaschen. Dabei sind eine Blasmaschine zum Herstellen der Flaschen, eine Spülmaschine zum Reinigen der fertig geblasenen Flaschen und eine Füllmaschine zum Befüllen der Flaschen synchron zueinander antreibbar und es werden die Flaschen durch formschlüssige Transportelemente teilungsgerecht zwischen den Maschinen überführt.

Aus der WO 2006/097243 A2 sind ein Verfahren und eine Vorrichtung betreffend das sterile Befüllen von Flüssigkeiten bekannt. Dabei werden die Flaschen zunächst mit H₂O₂ sterilisiert und anschließend befüllt.

Die DE 10 2005 060 814 A1 offenbart eine Vorrichtung und ein Verfahren zum Formblasen von Behältnissen auf. Dabei ist eine Inspektionseinrichtung zur Informationsübermittlung mit einer in der Transportrichtung der Behältnisse stromabwärts angeordneten Formblaseinrichtung verbunden, sodass als fehlerhaft erkannte Vorformlinge nicht zu Behältern geblasen werden. Damit werden hier bestimmte Behältnisse als fehlerhaft erkannt und zu einem späteren Zeitpunkt wird die weitere Behandlung dieser Behältnisse unterbrochen.

Die DE 102 59 589 B3 beschreibt ein Verfahren und eine Vorrichtung zum Herstellen von Hohlkörpern aus Kunststoff. Dabei werden Vorformlinge vor dem Erwärmen kontrolliert und es wird zumindest ein Teil der fehlerhaften Vorformlinge erwärmt und erst nach dem Erwärmen ausgeschieden.

Bei derartigen geblockten, d. h. insbesondere aufeinander synchronisierten Anlagenteilen besteht jedoch des Öfteren das Problem, dass in einem stromabwärts liegenden Anlagenteil ein Fehler vorliegt, beispielsweise bei einer Füllmaschine ein Ventil defekt ist und daher ein entsprechendes Behältnis nicht korrekt befüllt werden kann. Bei Anlagen aus dem Stand der Technik führt dies zu einer erheblichen Verschwendung. Einerseits wird das entsprechende Behältnis unnötigerweise erzeugt, bzw. unnötigerweise sterilisiert. Außerdem geht auch des Öfteren der abzufüllende Inhalt verloren, da, wie gesagt, fehlerhaft abgefüllt wurde. Der vorliegenden Erfindung liegt daher die Aufgabe zugrunde, eine Vorrichtung zu schaffen, welche einen wirtschaftlicheren Betrieb ermöglicht.

Dies wird erfindungsgemäß durch eine Vorrichtung nach Anspruch 1 und ein Verfahren nach Anspruch 10 erreicht. Vorteilhafte Ausgestaltungen sind Gegenstand der Unteransprüche.

Eine erfindungsgemäße Vorrichtung zum Behandeln von Behältnissen weist eine erste Behandlungseinheit auf, welche die Behältnisse in einer ersten vorgegebenen Weise behandelt. Weiterhin ist eine zweite Behandlungseinheit vorgesehen, welche in der Transportrichtung der Behältnisse stromabwärts bezüglich der ersten Behandlungseinheit angeordnet ist, wobei die zweite Behandlungseinheit eine Vielzahl von Behandlungselementen zum Behandeln der Behältnisse aufweist. Erfindungsgemäß weist die zweite Behandlungseinheit wenigstens eine Zustandserkennungseinrichtung auf, welche einen atypischen Zustand wenigstens eines Behandlungselements und eines von diesem Behandlungselement behandelten Behältnisses erkennt, sowie wenigstens eine Steuerungseinrichtung, welche diesem Behandlungselement wenigstens ein von diesem Behandlungselement zu behandelndes Behältnis oder wenigstens ein von diesem Behandlungselement behandeltes Behältnis zuordnet.

Weiterhin weist die Vorrichtung eine Sperreinrichtung auf, welche die Zufuhr der Behältnisse an wenigstens eine Behandlungseinheit unterbricht. Diese Sperreinrichtung unterbricht bevorzugt die Zufuhr aller Behältnisse, welche in die Vorrichtung gelangen. Nach dieser Unterbrechung kann die Anlage stillgesetzt werden, insbesondere um nötige Reparaturen an einem ggfs defekten Aggregat durchzuführen.

Vorteilhaft ist diese Sperreinrichtung stromaufwärts bezüglich der ersten Behandlungseinheit angeordnet. So kann es sich beispielsweise um eine Preformsperre am Einlauf zum Blasmaschinenofen handeln. Damit ist die Sperreinrichtung bevorzugt steuerbar. Weiterhin steuert bevorzugt die Steuereinrichtung auch die Sperreinrichtung insbesondere auch in Abhängigkeit von einem von der Zustandserfassungseinrichtung erfassten Zustand.

Die Begriffe "stromaufwärts" und "stromabwärts" werden unter Bezugnahme auf die Förder- bzw. Transportrichtung der Behältnisse, wie beispielsweise der Flaschen, durch die Vorrichtung verstanden. Unter einem Behandeln der Flaschen wird jeder Vorgang verstanden, der die Behältnisse in irgendeiner Weise beeinflusst insbesondere eine Erwärmung der Behältnisse, ein Expandieren von Vorformlingen zu Behältnissen, ein Etikettieren von Behältnissen, ein Desinfizieren von Behältnissen, ein Spülen von Behältnissen, ein Abfüllen von Behältnissen, ein Verschließen von Behältnissen aber auch ein Transport der Behältnisse sowohl in vereinzelter Form als auch in nicht vereinzelter Form.

Unter dem stromaufwärts zu behandelnden Behältnis wir insbesondere ein Behältnis verstanden, welches sich stromaufwärts bezüglich des besagten Behandlungselements befindet, und welches von dem besagten Behandlungselement behandelt werden wird. Damit werden diejenigen Behältnisse identifiziert, welche zu diesem Element gelangen würden. Es wäre jedoch auch möglich, solche Behältnisse zu identifizieren, welche von dem genannten Behandlungselement bereits behandelt wurden.

Unter einer Zustandserkennungseinrichtung wird eine Einrichtung verstanden, welche einen physikalischen Zustand der Behandlungseinheit bzw. des Behandlungselements oder des Behältnisses erfasst, wie beispielsweise die Funktionsfähigkeit eines Ventils, die Funktionsfähigkeit oder den Öffnungszustand eines Greifelements und dergleichen.

Unter einem atypischen Zustand wird ein Zustand verstanden, der von einem normalen Arbeitszustand abweicht. Insbesondere handelt es sich bei dem atypischen Zustand um einen Fehler des Behandlungselements wie beispielsweise ein nicht funktionierendes Ventil, eine nicht funktionierende Greifeinrichtung oder dergleichen. Es wäre jedoch auch möglich, einen atypischen Zustand des Behältnisses zu erfassen. So ist es teilweise möglich, dass einzelne Behältnisse fehlerhaft ausgebildet sind, diese fehlerhafte Ausbildung jedoch auf einen fehlerhaften Behandlungsvorgang, wie beispielsweise einen fehlerhaften Blasvorgang zurückzuführen ist. Es wäre jedoch auch möglich, dass die Vorrichtung keine Zustandserfassungseinrichtung aufweist, sondern der Benutzer selbst einen Fehlerzustand erkennt und in Reaktion hierauf die oben genannten Vorgänge und insbesondere auch die Sperrung der Vorformling - Zufuhr auslöst.

Damit wird im Rahmen der vorliegenden Erfindung vorgeschlagen, einen im Rahmen des Behandlungsprozesses später auftretenden Fehler festzustellen und in der Folge insbesondere zu bestimmen, welchen noch im Behandlungsvorgang früher befindlichen Behältnissen dieser Fehler zugeordnet wird. So ist es beispielsweise möglich, dass ein bestimmtes Ventil der Befüllungsanlage defekt ist. Erfindungsgemäß wird ermittelt, welche noch stromaufwärts befindlichen Behältnisse im weiteren Verfahrenslauf mit genau diesem Ventil befüllt werden. Diese Behältnisse können anschließend in besonderer Weise behandelt werden, beispielsweise bereits vorab ausgeschleust werden. Auf diese Weise ist es möglich, auftretende Verschwendungen, wie beispielsweise unnötig sterilisierte Behältnisse oder unnötig abgefüllte Behältnisse zu vermeiden. So kann beispielsweise eine gezielte Lücke bei dem funktionsunfähigen Ventil geschaffen werden.

Sollte mit anderen Worten eine Funktion eines Moduls gestört sein, sodass eine ordentliche Behandlung des Behältnisses in diesem Modul nicht gegeben ist, so wird beispielsweise eine Preform, die später in das defekte Modul bzw. die defekte Station einlaufen würde, gesperrt. Auf diese Weise erhält nun weniger Materialverlust, eine Charge kann fertig produziert und der Fehler kann später behoben werden. Damit muss ein entsprechender Off-Set so berechnet werden, dass eine Lücke genau auf die defekte Füllstation trifft. Im Stand der Technik wurde beispielsweise eine überfüllte Flasche nach der Vorrichtung über ein Kontrollsystem ausgeschieden, was zu erhöhten Materialverlust (Preform, Produkt, evtl. Verschluss und Etikett) zur Folge hat.

Daneben ist es auch möglich, diejenigen Behältnisse zu identifizieren, die bereits von dem (fehlerhaften) Behandlungselement behandelt wurden, um sie anschließend auszusondern. So könnte es sich bei dem Behandlungselement beispielsweise um ein nicht funktionierendes Etikettieraggregat handeln, welches die Behältnisse nicht oder nicht korrekt etikettiert. Diejenigen Behältnisse, welche dieses Etikettieraggregat durchlaufen haben, könnten ausgesondert werden um so deren weitere Behandlung zu vermeiden.

Erfindungsgemäß weist die Vorrichtung eine Aussonderungseinrichtung auf, welche das von dem Behandlungselement zu behandelnde Behältnis aussondert. Damit wird dasjenige Behältnis vorab ausgesondert, welches später auf das defekte Behandlungselement treffen würde. Unter Behältnissen werden hier sowohl die fertig geblasenen Behältnisse als auch etwaige Vorstufen wie Vorformlinge verstanden. Beispielsweise wäre es möglich, eine Preform-Sperre vorzusehen, welche bestimmte Preforms aussondert. Dabei wird darauf hingewiesen, dass die Preforms beispielsweise über eine Staustrecke zugeführt werden und die eigentliche Eintaktung erst am Ende dieser Staustrecke beginnt. An diesem Bereich kann ein Aussonderungsmechanismus vorgesehen sein.

Bei einer weiteren vorteilhaften Ausführungsform weist die Vorrichtung eine Aussonderungseinrichtung auf, welche von dem Behandlungselement behandelte Behältnisse aussondert. Eine derartige Aussonderungseinheit ist insbesondere stromabwärts der zweiten Behandlungseinheit angeordnet. Bevorzugt ist diese Aussonderungseinheit unmittelbar nach der zweiten Behandlungseinheit angeordnet, d.h. bevor sich weitere Behandlungseinheiten anschließen.

Bei dieser Aussonderungseinheit kann es sich beispielsweise um einen Auswerfer handeln, der bevorzugt an einem Übergabestern angeordnet ist, der die Behältnisse von der ersten Behandlungseinheit an die zweite oder eine weitere Behandlungseinheit übergibt. Vorteilhaft ist dieser Auswerfer (insbesonder in Abhängigkeit von einem Signal der Steuereinrichtung steuerbar.

Bei einer weiteren vorteilhaften Ausführungsform ist wenigstens eine Behandlungseinheit eine Etikettiereinrichtung für die Behältnisse. Diese Etikettiereinrichtung weist vorteilhaft mehrere Behandlungselemente bzw. Etikettieraggregate auf.

Bei einer weiteren bevorzugten Ausführungsform bewirkt die Steuerungseinrichtung dass jedes n-te Behältnis ausgesondert wird, wobei n die Anzahl der zweiten Behandlungselemente ist. Falls beispielsweise das Füllventil Nr. 56 (von 120 insgesamt) defekt ist und überfüllte Flaschen liefert, wird auf diese Weise jede 120te Pre-Form nicht in den Block gelassen. Es wären jedoch auch andere Möglichkeiten der Aussonderungen möglich, so konnten beispielsweise die Behältnisse zunächst geblasen und anschließend ausgesondert werden. In dem vorliegenden Fall wird beispielsweise jede 120te Flasche ausgesondert werden. Bei einer Arbeitsleistung von beispielsweise 36000 Flaschen pro Stunde würden auf diese Weise insgesamt 300 Flaschen pro Stunde ausgeschleust werden, d. h. diese Flaschen müssten nicht unnötigerweise befüllt werden. Auf diese Weise kann eine erhebliche Reduzierung von Materialverlust erreicht werden.

Bei einer weiteren vorteilhaften Ausführungsform ist die Aussonderungseinrichtung stromaufwärts bezüglich der zweiten Behandlungseinheit angeordnet, d. h. in der Bewegungsrichtung der Behältnisse vor der zweiten Behandlungseinheit. Auf diese Weise kann, wie oben erwähnt, eine Reduzierung von Verlusten erreicht werden.

Bei einer weiteren vorteilhaften Ausführungsform handelt es sich bei der zweiten Behandlungseinheit um eine Befüllungseinrichtung für die Behältnisse. Es wäre jedoch auch möglich, dass es sich bei der zweiten Behandlungseinheit um eine Sterilisationseinrichtung, eine Blaseinrichtung, eine Wascheinrichtung für Behältnisse oder dergleichen handelt.

Bei einer weiteren vorteilhaften Ausführungsform handelt es sich bei der ersten Behandlungseinheit um eine Transporteinrichtung für die Vorformlinge wobei unter einer Transporteinrichtung hier auch eine Staustrecke verstanden wird, entlang derer die Behältnisse bzw. die Vorformlinge (ggfs auch nicht vereinzelt) geführt werden. Weiterhin könnte es jedoch bei der ersten Behandlungseinheit auch um eine Heizeinrichtung für Vorformlinge, eine Blaseinrichtung für die Vorformlinge, eine Reinigungseinrichtung oder eine Desinfektionseinrichtung für die Behältnisse und dergleichen handeln.

Bei einer weiteren vorteilhaften Ausführungsform weist die Vorrichtung eine Pufferungseinheit für ausgesonderte Behältnisse auf. Wie oben erwähnt, wäre es möglich, bereits bestimmte Vorformlinge auszusondern. Dies würde jedoch dazu führen, dass aufgrund der genau dimensionierten Heizparameter auch der vor dem ausgesonderten und der nach dem ausgesonderten Vorformling liegende Vorformling (Preform) (nach dem Heizvorgang) ausgesondert werden müsste. Aus diesem Grunde wird in einer bevorzugten Ausgestaltung vorgeschlagen, sämtliche Behältnisse zunächst blasen zu lassen dann jedoch das genau identifizierte Behältnis auszusondern und in einer Pufferungseinheit unterzubringen. Aus dieser Pufferungseinheit könnten die Behältnisse später wieder entnommen werden, sodass auf diese Weise eine weitere Reduzierung von Verlusten erreicht werden kann. Bei einer weiteren vorteilhaften Ausführungsform weist die erste Behandlungseinheit eine Vielzahl von Behandlungselementen auf. Dabei kann es sich beispielsweise um Greifelemente handeln, welche die Behältnisse entlang eines vorbestimmten Pfades führen. In diesem Fall kann beispielsweise ein bestimmtes Behandlungselement identifiziert werden, welches anschließend das von ihm gehaltene Behältnis aussondert.

Die vorliegende Erfindung ist weiterhin auf ein Verfahren zum Behandeln von Behältnissen gerichtet, wobei die Behältnisse in einer ersten Behandlungseinheit in einer ersten vorgegebenen Weise behandelt werden und anschließend in einer zweiten Behandlungseinheit mit einer Vielzahl von Behandlungselementen in einer zweiten vorgesehenen Weise behandelt werden. Erfindungsgemäß wird ein atypischer Zustand wenigstens eines Behandlungselements oder eines von diesem Behandlungselement behandelten Behältnis erkannt und diesem Behandlungselement wenigstens ein von diesem Behandlungselement zu behandelndes Behältnis oder wenigstens ein von diesem Behandlungselement behandeltes Behältnis zugeordnet und die Zufuhr der Behältnisse wenigstens zeitweise unterbrochen.

Bevorzugt wird eine Gruppe von Behältnissen diesem Behandlungselement zugeordnet. Durch die Unterbrechung der Zufuhr der Behältnisse kann die Vorrichtung gezielt leer gefahren werden, wobei gleichzeitig die Menge an Ausschuss möglichst gering gehalten wird Damit wird auch damit bei dem erfindungsgemäßen Verfahren ein stromaufwärts stattfindender Eingriff vorgeschlagen, der im weiteren Arbeitsverlauf der Maschine bewirken kann, dass das defekte Behandlungselement keine weiteren unnötigen Verluste produziert.

Das von dem ersten Behandlungselement künftig zu behandelnde Behältnis wird ausgesondert.

Es wäre jedoch auch möglich, dass ein bereits von dem Behandlungselement behandeltes Behältnis ausgesondert wird. Dies ist insbesondere dann relevant, wenn solche weiteren Arbeitsschritte an diesem Behältnis vermieden werden sollen, welche stromabwärts bzgl. dieses Behandlungselements erfolgen sollen.

Bei einem weiteren vorteilhaften Verfahren wird eine Zufuhr der Behältnisse, insbesondere in ihrer Gesamtheit unterbrochen. Bei einem weiteren bevorzugten Verfahren wird die Vorrichtung nach der Unterbrechung der Zufuhr der Behältnisse - insbesondere nach der Behandlung der nach der Sperrung noch in der Maschine befindlichen Behältnisse - für einen vorgegebenen Zeitraum stillgesetzt.

Vorzugsweise werden all diejenigen Behältnisse ausgesondert, die künftig von dem (betreffenden, als atypisch arbeitend erkannten) Behandlungselement behandelt würden. Dabei werden insbesondere bei Erkennen eines Fehlers sämtliche Behältnisse ausgesondert, die künftig an dieses spezielle Behandlungselement gelangen würden.

Vorzugweise werden die auzusondernden Behältnisse nach einem Heizvorgang für die Behältnisse ausgesondert. Bei einer weiteren vorteilhaften Ausführungsform werden die auszusondernden Behältnisse nach dem Blasvorgang ausgesondert, und besonders bevorzugt in einer Pufferungseinrichtung angeordnet.

Weitere Vorteile und Ausführungsformen ergeben sich aus den beigefügten Figuren:

### Darin zeigen:

- Fig. 1: eine erfindungsgemäße Vorrichtung in einer ersten Ausführungsform;
- Fig. 2: eine erfindungsgemäße Vorrichtung in einer zweiten Ausführungsform;
- Fig. 3a: eine erfindungsgemäße Vorrichtung in einer dritten Ausführungsform; und
- Fig. 3b: eine erfindungsgemäße Vorrichtung in einer vierten Ausführungsform.

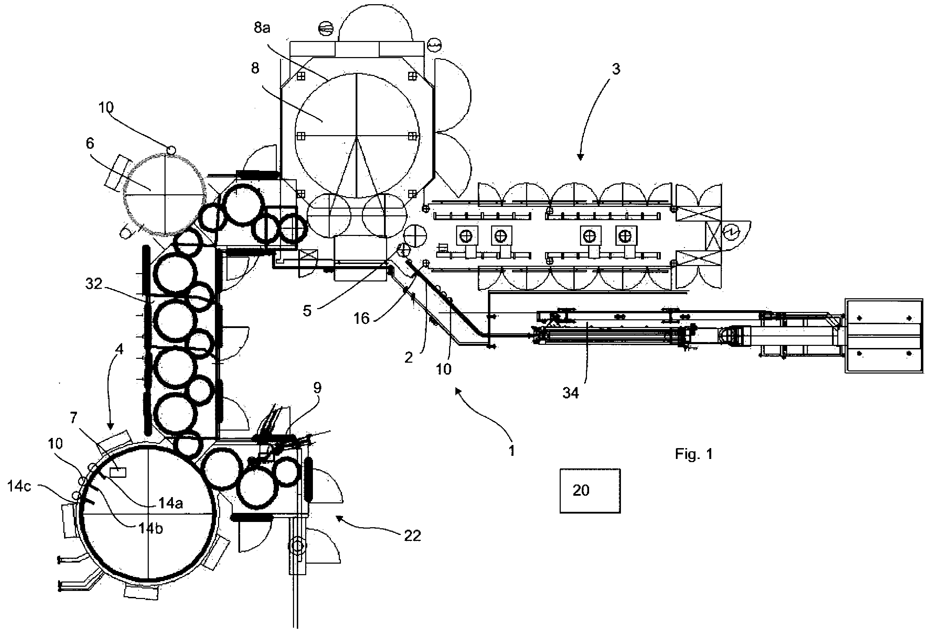

Fig. 1 zeigt eine erfindungsgemäße Vorrichtung 1 zum Behandeln von Behältnissen 10. Dabei bezieht sich das Bezugszeichen 2 auf eine erste Behandlungseinheit in Form einer Transporteinrichtung 2. Diese Transporteinrichtung 2 ist hier als Rutsche ausgeführt, entlang derer Behältnisse 10 bzw. Ketten von Behältnissen transportiert werden. In diesem Bereich sind die Behältnisse noch nicht vereinzelt. Stromaufwärts bezüglich dieser ersten Behandlungseinheit könnte ein Magazin oder auch ein Sortierer 34 für die Behältnisse vorgesehen sein, der die Behältnisse in eine bestimmte Ausgangslage verbringt.

Das Bezugszeichen 5 bezieht sich auf ein Eintaktrad, welches die Behältnisse an eine (nicht gezeigte) Transporteinrichtung übergibt, wobei diese Transporteinrichtung die Behältnisse bzw. Vorformlinge durch eine Heizeinrichtung 3 fördert. Ab diesem Eintacktrad 5 werden die Behältnisse vereinzelt geführt. Unmittelbar an oder bei diesem Eintacktrad 5 ist eine Aussonderungseinrichtung 16 vorgesehen, welche einzelne Behältnisse 10 aussondern kann. Auf diese Weise können gezielt Lücken auf der Transportbahn der Behältnisse erzeugt werden. Die Behältnisse werden anschließend, wie oben erwähnt, durch die Heizeinrichtung 3 gefördert und dort erwärmt. Die Heizeinrichtung 3 weist dabei bereits Halteelemente für die Behältnisse, beispielsweise in Form von Dornen, auf welche die Behältnisse aufgesteckt werden, auf. Diese Elemente sind dabei durch die Bezugszeichen 12a, 12b und 12c gekennzeichnet.

Anschließend werden die Behältnisse an eine Blaseinrichtung 8 übergeben, wobei diese Blaseinrichtung ein Blasrad 8a mit einer Vielzahl von daran angeordneten Blasstationen aufweist.

Nachdem in dieser Blasstation die Vorformlinge zu Behältnissen expandiert worden sind, werden diese an eine Spüleinheit 6 übergeben. In dieser Spüleinheit 6 (auch als Rinser bezeichnet) werden die bereits erzeugten Behältnisse 10 mit Klarwasser gespült. An diese Spüleinheit schließt sich eine Vielzahl von Transportsternen oder Transporträdern 32 an wobei in diesem Bereich auch eine Innen- bzw. Außendesinfektion der Behältnisse beispielsweise mit H₂O₂ oder dergleichen stattfindet.

Das Bezugszeichen 4 bezieht sich auf eine Fülleinrichtung, die eine Vielzahl von Behandlungselementen 14a, 14b, 14c zum Befüllen der Behältnisse aufweist. An diese Fülleinrichtung schließt sich noch eine Verschließeinrichtung 9 an, die die bereits befüllten Behältnisse verschließt.

Das Bezugszeichen 7 kennzeichnet eine (nur schematisch dargestellte) Zustandserkennungseinrichtung, welche Zustände der Behandlungselemente erfasst, wie insbesondere aber nicht ausschließlich Fehlerzustände. Auch wäre es möglich, dass jedem Behandlungselement 14a, 14b, 14c eine derartige Zustandserkennungseinrichtung zugeordnet ist oder auch, dass jedem Behandlungselement 14a, 14b, 14c mehrere Zustandserkennungseinrichtungen 7 zugeordnet sind, die unterschiedliche Zustände des Behandlungselements erfassen.

Bei der Zustandserkennungseinrichtung 7 kann es sich beispielsweise um einen Durchflusssensor handeln, der erfasst, ob ein bestimmtes Füllventil zum richtigen Zeitpunkt die richtige Menge an Flüssigkeit in das Behältnis 10 füllt. Auch könnte es sich bei der Zustandserkennungseinrichtung 7 um einen Sensor handeln, der bestimmte Parameter des behandelten Behältnisses erfasst wie z.B. einen Sensor, der eine Überfüllung des Behältnisses mit dem Getränk feststellt. Derartige Zustandserkennungseinrichtungen könnten auch an anderen Behandlungseinheiten vorgesehen sein wie beispielsweise einer Desinfektionseinheit.

In der Folge könnte noch eine (nicht gezeigte) Etikettiereinrichtung für die bereits befüllten Behältnisse vorgesehen sein.

Damit werden die Behältnisse 10, wie oben erwähnt, ab dem Eintaktstern 5 vereinzelt transportiert und sind damit identifizierbar. Falls beispielsweise an dem Behandlungselement 14a eine Fehlfunktion festgestellt wird, kann mit Hilfe einer Prozessoreinrichtung 20 ermittelt werden, welche Behältnisse künftig zu diesem defekten Behandlungselement bzw. Füllelement 14a gelangen werden. Diese entsprechenden Behältnisse können über die Aussonderungseinrichtung 16 ausgesondert werden und damit kann stromaufwärts bezüglich der Fülleinrichtung 4 gezielt eine Lücke erzeugt werden, die später auf das defekte Füllelement bzw. Behandlungselement 14a trifft. Damit werden in einer kontinuierlichen Abfolge von Behältnissen gezielt Lücken erzeugt, wobei diese Lücken gezielt stromaufwärts bezüglich eines als defekt festgestellten Behandlungselements erzeugt werden. Bei der Aussonderungseinrichtung kann es sich um einen Klappenmechanismus handeln, der in der Lage ist, einzelne Behältnisse aus einem Strom von Behältnissen auszusondern.

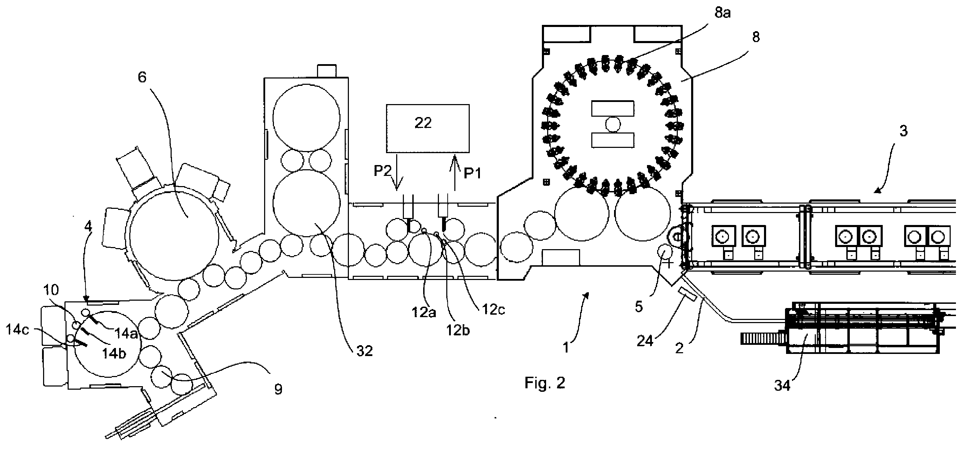

Fig. 2 zeigt eine weitere Ausführungsform einer erfindungsgemäßen Vorrichtung. Diese weist ebenfalls die auch in Fig. 1 gezeigten Hauptelemente auf, wie eine Heizeinrichtung 3, eine Blaseinrichtung 8, eine Entkeimungseinrichtung 32, eine Klarwasserspüleinrichtung 6 sowie eine Fülleinrichtung 4, der eine Verschließeinrichtung 9 nachgeordnet ist. Im Gegensatz zu der in Fig. 1 gezeigten Ausführungsform werden hier die Behältnisse 10 nicht stromaufwärts bzw. vor der Heizeinrichtung 3 ausgesondert sonder die Behältnisse werden zunächst durch die Heizeinrichtung 3 geführt, anschließend in der Blaseinrichtung 8 geblasen und bei Erkennen eines Defekts eines Behandlungselements 14a erst stromabwärts bzw. nach der Blaseinrichtung entlang des Pfeils P1 in eine Pufferstrecke ausgeleitet.

Damit werden bei dieser Ausführungsform zunächst fertige Behältnisse erzeugt, diese jedoch nicht entkeimt, sondern in fertig geblasenem Zustand entnommen. Bei dieser Ausführungsform werden gezielt bestimmte Behandlungselemente 12a, 12b oder 12c angesprochen, welche die von ihnen gehaltenen Behältnisse freigeben. Damit werden bei dieser Ausführungsform den Behandlungselementen 14a, 14b, 14c insbesondere im Fehlerfall bestimmte Behandlungselemente 12a, 12b, 12c zugeordnet, welche diejenigen Behältnisse führen, die im späteren Betrieb der Anlage zu einem defekten Behandlungselement 14a gelangen würden.

Bei der in den Figuren 1 und 2 gezeigten Ausführungsform ist die zweite Behandlungseinheit die Fülleinrichtung 4. Es wäre jedoch auch möglich, dass es sich bei der zweiten Behandlungseinheit 4 um eine andere Einheit, wie beispielsweise die Blaseinrichtung 8 handelt.

Die entlang des Pfeils P1 ausgesonderten Behältnisse können später bei Behebung des Fehlers der Anlage wieder zugeführt (Pfeil P2) werden wobei diese Behältnisse dann zunächst entkeimt, mit Klarwasser gespült und schließlich mit Getränk befüllt werden. Das Bezugszeichen 22 bezieht sich auf eine entsprechende Pufferungseinheit, in der die Behältnisse 10 zwischengespeichert werden. Das Bezugszeichen 24a bezieht sich auf eine Preformsperre, welche die Zufuhr der Vorformlinge in die Heizeinrichtung vollständig unterbricht. Nachdem die Zufuhr unterbrochen worden ist, kann die Vorrichtung gezielt leer gefahren werden.

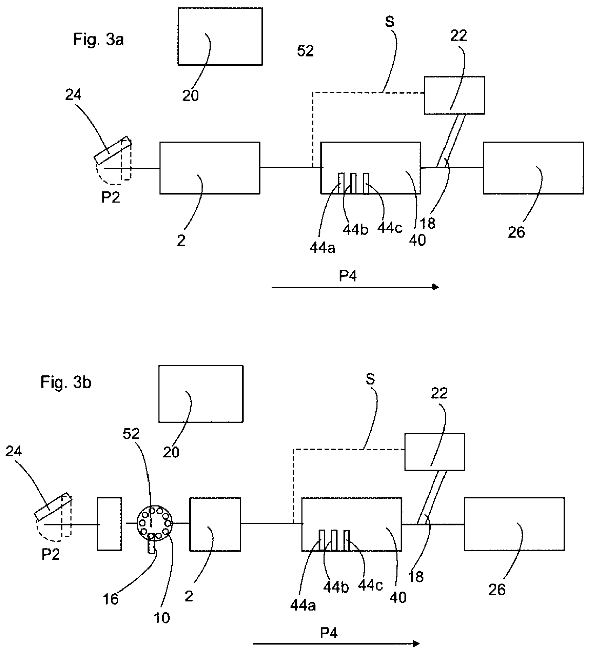

Fig. 3a zeigt grob schematisch eine weitere Ausgestaltung der vorliegenden Erfindung. In diesem Falle handelt es sich bei einer ersten Behandlungseinheit 2 um eine Blasmaschine mit vorgeschalteter Heizeinrichtung, welche die Vorformlinge zunächst erwärmt und anschließend zu Kunststoffbehältnissen expandiert. An diese Blasmaschine schließt sich als zweite Behandlungseinheit eine Etikettiereinrichtung 40 an, welche hier zwei Etikettieraggregate 44a und 44b aufweist. Das Bezugszeichen 26 bezieht sich auf eine weitere Behandlungseinheit, bei der es sich hier beispielsweise um einen Füller handeln kann. Der Pfeil P4 kennzeichnet die Transportrichtung der Behältnisse.

Für die folgende Beschreibung wird zugrundegelegt, dass ein Etikettieraggregat 44a auf Störung geht. In der Folge dieser Störung wird eine Einlaufsperre 24 bzw. Sperreinrichtung geschlossen, sodass keine weiteren Vorformlinge mehr in die Heizeinrichtung und Blasmaschine 2 gelangen. Die in der Heizeinrichtung befindlichen Kunststoffvorformlinge werden in der Blasmaschine geblasen und an die zweite Behandlungseinheit d. h. die Etikettiereinrichtung weitergegeben. Die an dem noch funktionstüchtigen Aggregat 44b vorbeilaufenden Behältnisse werden von diesem etikettiert. Die an dem defekten Aggregat 44a vorbeilaufenden Behältnisse werden nicht etikettiert sondern nach dem Auslauf der Etikettiermaschine 40 ausgeschieden und kontrolliert gesammelt.

Dies bedeutet auch hier, dass diejenigen Behältnisse identifiziert werden, welche durch das Etikettieraggregat 44a behandelt werden. Auch wäre es möglich, (nachträglich) diejenigen Behältnisse zu identifizieren, welche dieses defekte Etikettieraggregat 44a durchlaufen haben und daher nicht ordnungsgemäß etikettiert wurden. Das Bezugszeichen 18 bezieht sich auf eine entsprechende Sperreinrichtung bzw. Ausschleuseinrichtung, welche gezielt diejenigen Behältnisse, welche nicht ordnungsgemäß etikettiert wurden, aussondert und einer Puffereinrichtung 22 zuführt. Die etikettierten Behältnisse werden an das nachfolgende System, hier einen Füller 26, zur Weiterverarbeitung transportiert.

Dieser nach der Störung eingeleitete Prozess dauert so lange, bis die letzten Behälter seitens der Blasmaschine 2 durch die Etikettiermaschine 40 gefördert wurden. Anschließend wird der komplette Block aus den Maschinen 2, 40 und 26 in den Stillstand versetzt, sodass anschließend die Störung an dem Aggregat 44b beseitigt werden kann. Die Produktion kann anschließend mit beiden Aggregaten 44a und 44b wieder beginnen. Die ausgeschiedenen nicht etikettierten Behältnisse können gegebenenfalls (Bezugszeichen S) wieder in das System eingeschleust werden, wobei jedoch auch ein (komplettes) Verwerfen dieser Behältnisse möglich ist.

Bei einer in Fig. 3b gezeigten zweiten Alternative ist zwischen einer Heizeinrichtung 2a und einer Blasmaschine 2 zusätzlich ein Übergabestern 52 mit einem ansteuerbaren Auswerfer vorgesehen. Dieser Auswerfer enthält seitens einer Steuerungseinrichtung die Information, welche Vorformlinge bzw. Behältnisse an dieser Stelle ausgeschleust werden bzw. welche Vorformlinge an das Blasmodul 2 übergeben werden können, um anschließend den Behälter am noch funktionierenden Aggregat 44a zu etikettieren. Damit werden bei dieser Variante bereits die Kunststoffvorformlinge vor dem eigentlichen Expansionsvorgang ausgeschleust. Dabei wäre es sowohl möglich, den Ausschluss der Vorformlinge vor der Heizeinrichtung vorzunehmen oder auch bevorzugt nach der Heizeinrichtung die einzelnen bereits erwärmten Vorformlinge auszuscheiden. Bei letzterer Variante werden bevorzugt an dem defekten Etikettieraggregat 44a keine Behältnisse mehr vorbeigeführt. Das Aussondern der Vorformlinge erst nach deren Erwärmung ist vorteilhaft, da der Erwärmungsprozess auch auf die Gesamtheit der Vorformlinge abgestimmt ist und die Herausnahme einzelner Vorformlinge auch die Erwärmung der übrigen Vorformlinge beeinflussen kann

Damit werden sämtliche Kunststoffvorformlinge, welche theoretisch an dem defekten Aggregat 44b etikettiert werden sollten, an diesem Übergabestern 52 ausgeschieden und verworfen.

Die bereits auf dem Weg befindlichen Behältnisse vom Blasmodul zur Etikettiermaschine werden, wie oben beschrieben, durch das noch aktive Aggregat 44b etikettiert. Die nicht zu etikettierbaren Behältnisse können nach der Etikettiermaschine 40 kontrolliert ausgeschleust und eventuell einer Wiederverwendung zugeführt werden. Auch bei diesem Verfahren dauert der nach Zerstörung eingeleitete Prozess solange, bis die letzten Behälter seitens der Blasmaschine durch die Etikettiermaschine gefördert wurden, anschließend geht auch hier der komplette Block in Stillstand. Die Sperreinrichtung ist bevorzgt stromaufwärts bezüglich der ersten Behandlungseinheit, insbesondere stromaufwärts bezüglich der Heizeinrichtung angeordnet.

### Bezugszeichenliste

- 1: Vorrichtung
- 2: Erste Behandlungseinheit
- 3: Heizeinrichtung
- 4: Zweite Behandlungseinheit
- 5: Eintaktrad
- 6: Spüleinheit
- 7: Zustandserkennungseinrichtung
- 8: Blaseinrichtung
- 8a: Blasrad
- 9: Verschließeinrichtung
- 10: Behältnis
- 12a, 12b, 12c: Behandlungselemente (der ersten Behandlungseinheit)
- 14a, 14b, 14c: Behandlungselemente (der zweiten Behandlungseinheit)
- 16: Aussonderungseinrichtung
- 20: Steuerungseinrichtung
- 22: Pufferungseinheit
- 24: Sperreinrichtung
- 26: Behandlungseinheit
- 32: Entkeimungseinrichtung
- 34: Sortierer
- 40: Etikettiereinrichtung
- 44a, 44b: Etikettieraggregat
- 52: Übergabestern

## Patentansprüche

1. Vorrichtung zum Behandeln von Behältnissen (10) mit einer ersten Behandlungseinheit (2), welche die Behältnisse (10) in einer ersten vorgegebenen Weise behandelt, und mit einer zweiten Behandlungseinheit (4, 40), welche in der Transportrichtung der Behältnisse (10) stromabwärts bezüglich der ersten Behandlungseinheit (2) angeordnet ist, wobei die zweite Behandlungseinheit eine Vielzahl von Behandlungselementen (14a, 14b, 14c, 44a, 44b, 44c) zum Behandeln der Behältnisse (10) aufweist,
wobei die zweite Behandlungseinheit (4, 40) wenigstens eine Zustandserkennungseinrichtung (7) aufweist, welche einen atypischen Zustand wenigstens eines Behandlungselements (14a, 44a) oder eines von diesem Behandlungselement behandelten Behältnisses erkennt sowie wenigstens eine Steuerungseinrichtung (20) aufweist, welche diesem Behandlungselement (14a, 44a) wenigstens ein von diesem Behandlungselement (14a, 44a) zu behandelndes Behältnis (10) oder von diesem Behandlungselement (14a, 44a) behandeltes Behältnis (10) zuordnet und die Vorrichtung eine Sperreinrichtung (24) aufweist, welche die Zufuhr der Behältnisse an wenigstens eine Behandlungseinheit (2, 4, 40) unterbricht,
**dadurch gekennzeichnet, dass**
die Vorrichtung eine Aussonderungseinrichtung (16) aufweist, welche von dem Behandlungselement (14a, 44a) zu behandelnde Behältnisse (10) aussondert, welche später auf ein defektes Behandlungselement (14a, 44a) treffen würden und dass über die Aussonderungseinrichtung (16) stromaufwärts bezüglich des defekten Behandlungselements (14a, 44a) gezielt Lücken in einer kontinuierlichen Abfolge von Behältnissen (10) erzeugt werden und diese Lücken später auf das defekte Behandlungselement (14a, 44a) treffen.

2. Vorrichtung nach Anspruch 1,
**dadurch gekennzeichnet, dass**
die Aussonderungseinrichtung (18) von dem Behandlungselement (14a, 44a) behandelte Behältnisse (10) aussondert.

3. Vorrichtung nach wenigstens einem der vorangegangenen Ansprüche,
**dadurch gekennzeichnet, dass**
wenigstens eine Behandlungseinheit (2, 4, 40) eine Etikettiereinrichtung für die Behältnisse ist.

4. Vorrichtung nach wenigstens einem der vorangegangenen Ansprüche,
**dadurch gekennzeichnet, dass**
die Steuerungseinrichtung (20) bewirkt, dass jedes n-te Behältnis (10) ausgesondert wird, wobei n die Anzahl der zweiten Behandlungselemente (14a, 14b, 14c) ist.

5. Vorrichtung nach wenigstens einem der vorangegangenen Ansprüche,
**dadurch gekennzeichnet, dass**
die erste Behandlungseinheit (2) und die zweite Behandlungseinheit (4, 40) aufeinander synchronisiert sind.

6. Vorrichtung nach wenigstens einem der vorangegangenen Ansprüche,
**dadurch gekennzeichnet, dass**
die zweite Behandlungseinheit (4, 40) eine Befüllungseinrichtung (4, 40) für die Behältnisse (10) ist.

7. Vorrichtung nach wenigstens einem der vorangegangenen Ansprüche,
**dadurch gekennzeichnet, dass**
die erste Behandlungseinheit (2) eine Heizeinrichtung (2) für Vorformlinge oder eine Blaseinrichtung für Behältnisse (10) ist.

8. Vorrichtung nach wenigstens einem der vorangegangenen Ansprüche 2 - 7,
**dadurch gekennzeichnet, dass**
die Vorrichtung eine Pufferungseinheit (22) für ausgesonderte Behältnisse (10) aufweist.

9. Vorrichtung nach wenigstens einem der vorangegangenen Ansprüche 2 - 7,
**dadurch gekennzeichnet, dass**
die erste Behandlungseinheit eine (2) eine Vielzahl von Behandlungselementen (12a, 12b, 12c) zum Behandeln der Behältnisse aufweist.

10. Verfahren zum Behandeln von Behältnissen, wobei die Behältnisse (10) in einer ersten Behandlungseinheit (2) in einer ersten vorgegebenen Weise behandelt werden und anschließend in einer zweiten Behandlungseinheit (4, 40) mit einer zweiten Vielzahl von Behandlungselementen (14) in einer zweiten vorgegebenen Weise behandelt werden, wobei ein atypischer Zustand wenigstens eines Behandlungselements (14a, 44a) oder eines von diesem Behandlungselement (14a, 44a) behandelten Behältnisses (10) erkannt wird und diesem Behandlungselement (14a, 44a) wenigstens ein von diesem Behandlungselement (14a, 44a) zu behandelndes Behältnis (10) und/oder wenigstens ein von diesem Behandlungselement (14a, 44a) behandeltes Behältnis (10) zugeordnet wird und die Zufuhr der Behältnisse wenigstens zeitweise unterbrochen wird,
**dadurch gekennzeichnet, dass**
das von dem Behandlungselement (14a, 44a) zu behandelnde Behältnis (10), welches später auf ein defektes Behandlungselement (14a, 44a) treffen würde ausgesondert wird und dass stromaufwärts bezüglich des defekten Behandlungselements (14a, 44a) gezielt Lücken in einer kontinuierlichen Abfolge von Behältnissen (10) erzeugt werden und diese Lücken später auf das defekte Behandlungselement (14a, 44a) treffen.

11. Verfahren nach Anspruch 10,
**dadurch gekennzeichnet, dass**
die auszusondernden Behältnisse (10) nach einem Heizvorgang für die Behältnisse (10) ausgesondert werden.

12. Verfahren nach wenigstens einem der vorangegangenen Ansprüche,
**dadurch gekennzeichnet, dass**
die auszusondernden Behältnisse (10) in einer Pufferungseinheit (22) angeordnet werden.

## Claims

1. A device for the treatment of containers (10) with a first treatment unit (2) which treats the containers (10) in a first pre-set manner, and with a second treatment unit (4, 40), which is arranged downstream with respect to the first treatment unit (2) in the conveying direction of the containers (10), wherein the second treatment unit has a plurality of treatment elements (14a, 14b, 14c, 44a, 44b, 44c) for treatment the containers (10), wherein the second treatment unit (4, 40) has at least one state-recognition device (7), which recognizes an atypical state of at least one treatment element (14a, 44a) or one container treated by this treatment element, and at least one control device (20) which assigns to this treatment element (14a, 44a) at least one container (10) to be treated by this treatment element (14a, 44a) or at least one container (10) treated by this treatment element (14a, 44a), and the device has a barring device (24) which interrupts the supply of containers to at least one treatment unit (2, 4, 40), **characterized in that** the device has a separating device (16) which separates out containers (10) to be treated by the treatment element (14a, 44a), which would afterwards meet a defective treatment element (14a, 44a) and that by the separating device (16) upstream relative to the defective treatment element (14a, 44a) gaps are produced in a targeted manner in a continuous sequence of containers (10) and these gaps afterwards meet the defective treatment element (14a, 44a).

2. A device according to claim 1, **characterized in that** the separating device (18) separates out containers (10) treated by the treatment element (14a, 44a).

3. A device according to at least one of the preceding claims, **characterized in that** at least one treatment unit (2, 4, 40) is a labelling device for the containers.

4. A device according to at least one of the preceding claims, **characterized in that** the control device (20) causes every n-th container (10) to be separated out, wherein n is the number of the second treatment units (14a, 14b, 14c).

5. A device according to at least one of the preceding claims, **characterized in that** the first treatment unit (2) and the second treatment unit (4, 40) are synchronized with each other.

6. A device according to at least one of the preceding claims, **characterized in that** the second treatment unit (4, 40) is a filling device (4, 40) for the containers (10).

7. A device according to at least one of the preceding claims, **characterized in that** the first treatment unit (2) is a heating device (2) for pre-forms or a blow-moulding device for containers (10).

8. A device according to at least one of the preceding claims 2 to 7, **characterized in that** the device has a buffering unit (22) for separated containers (10).

9. A device according to at least one of the preceding claims 2 to 7, **characterized in that** the first treatment unit (2) has a plurality of treatment elements (12a, 12b, 12c) for treatment the containers (10).

10. A method of treatment containers, wherein the containers (10) are treated in a first pre-set manner in a first treatment unit (2) and are then treated in a second pre-set manner in a second treatment unit (4, 40) with a second plurality of treatment elements (14), wherein an atypical state of at least one treatment element (14a, 44a) or a container (10) treated by this treatment element (14a, 44a) is recognized and this treatment element (14a, 44a) has assigned to it at least one container (10) to be treated by this treatment element (14a, 44a) and/or at least one container (10) treated by this treatment element (14a, 44a) and the supply of the containers is interrupted at least temporarily, **characterized in that** the container (10) to be treated by the treatment element (14a, 44a) which would afterwards meet a defective treatment element (14a, 44a) is separated out and that upstream relative to the defective treatment element (14a, 44a) gaps are produced in a targeted manner in a continuous sequence of containers (10) and these gaps afterwards meet the defective treatment element (14a, 44a).

11. A method according to claim 10, **characterized in that** the containers (10) to be separated out are separated out after a heating procedure for the containers (10).

12. A method according to at least one of the preceding claims, **characterized in that** the containers (10) to be separated out are arranged in a buffering device (22).

## Revendications

1. Dispositif servant à traiter des contenants (10), comprenant une première unité de traitement (2), qui traite les contenants (10) d'une première manière prédéfinie, et comprenant une deuxième unité de traitement (4, 40), qui est disposée dans la direction de transport des contenants (10) en aval par rapport à la première unité de traitement (2), sachant que la deuxième unité de traitement présente une pluralité d'éléments de traitement (14a, 14b, 14c, 44a, 44b, 44c) servant à traiter des contenants (10),
sachant
que la deuxième unité de traitement (4, 40) présente au moins un système d'identification d'état (7), qui identifie un état atypique au moins d'un élément de traitement (14a, 44a) ou d'un contenant traité par ledit élément de traitement, et au moins un système de commande (20), qui associe audit élément de traitement (14a, 44a) au moins un contenant (10) à traiter par ledit élément de traitement (14a, 44a) ou un contenant (10) traité par ledit élément de traitement (14a, 44a), et sachant que le dispositif présente un système de blocage (24), qui interrompt l'amenée des contenants à au moins une unité de traitement (2, 4, 40),
**caractérisé en ce**
**que** le dispositif présente un système de séparation (16), qui sépare des contenants (10) à traiter par l'élément de traitement (14a, 44a), lesquels arriveraient ultérieurement sur un élément de traitement (14a, 44a) défectueux, et
en ce que des vides sont produits de manière ciblée dans une succession continue de contenants (10) par l'intermédiaire du système de séparation (16) en amont par rapport à l'élément de traitement (14a, 44a) défectueux, et en ce que lesdits vides arrivent ultérieurement sur l'élément de traitement (14a, 44a) défectueux.

2. Dispositif selon la revendication 1,
**caractérisé en ce**
**que** le dispositif de séparation (18) sépare des contenants (10) traités par l'élément de traitement (14a, 44a).

3. Dispositif selon au moins l'une quelconque des revendications précédentes,
**caractérisé en ce**
**qu'**au moins une unité de traitement (2, 4, 40) est un système d'étiquetage pour les contenants.

4. Dispositif selon au moins l'une quelconque des revendications précédentes,
**caractérisé en ce**
**que** le système de commande (20) a pour conséquence que chaque n^{ième} contenant (10) est séparé, sachant que n est le nombre des deuxièmes éléments de traitement (14a, 14b, 14c).

5. Dispositif selon au moins l'une quelconque des revendications précédentes,
**caractérisé en ce**
**que** la première unité de traitement (2) et la deuxième unité de traitement (4, 40) sont synchronisées l'une sur l'autre.

6. Dispositif selon au moins l'une quelconque des revendications précédentes,
**caractérisé en ce**
**que** la deuxième unité de traitement (4, 40) est un système de remplissage (4, 40) pour les contenants (10).

7. Dispositif selon au moins l'une quelconque des revendications précédentes,
**caractérisé en ce**
**que** la première unité de traitement (2) est un système de chauffage (2) pour des préformes ou un système de soufflage pour des contenants (10).

8. Dispositif selon au moins l'une quelconque des revendications 2 - 7,
**caractérisé en ce**
**que** le dispositif présente une unité de mise en tampon (22) pour des contenants (10) séparés.

9. Dispositif selon au moins l'une quelconque des revendications 2 - 7,
**caractérisé en ce**
**que** la première unité de traitement (2) présente une pluralité d'éléments de traitement (12a, 12b, 12c) servant à traiter les contenants.

10. Procédé servant à traiter des contenants, sachant que les contenants (10) sont traités dans une première unité de traitement (2) selon une première manière prédéfinie, puis sont traités immédiatement après dans une deuxième unité de traitement (4, 40) comprenant une deuxième pluralité d'éléments de traitement (14) selon une deuxième manière prédéfinie,
sachant
qu'un état atypique au moins d'un élément de traitement (14a, 44a) ou d'un contenant (10) traité par ledit élément de traitement (14a, 44a) est identifié, et qu'au moins un contenant (10) à traiter par ledit élément de traitement (14a, 44a) et/ou au moins un contenant (10) traité par ledit élément de traitement (14a, 44a) est associé audit élément de traitement (14a, 44a), et que l'amenée des contenants est interrompue au moins par intermittence,
**caractérisé en ce**
**que** le contenant (10) à traiter par l'élément de traitement (14a, 44a), qui arriverait ultérieurement sur un élément de traitement (14a, 44a) défectueux, est séparé, et en ce que des vides sont produits de manière ciblée dans une succession continue de contenants (10) en amont par rapport à l'élément de traitement (14a, 44a) défectueux, et en ce que lesdits vides arrivent ultérieurement sur l'élément de traitement (14a, 44a) défectueux.

11. Procédé selon la revendication 10,
**caractérisé en ce**
**que** les contenants (10) à séparer sont séparés après une opération de chauffage pour les contenants (10).

12. Procédé selon au moins l'une quelconque des revendications précédentes,
**caractérisé en ce**
**que** les contenants (10) à séparer sont disposés dans une unité de mise en tampon (22).
